# EUROPÄISCHE PATENTSCHRIFT

(11) **EP 0 924 981 B1**
(45) Veröffentlichungstag und Bekanntmachung des Hinweises auf die Patenterteilung: **27.11.2002**
(21) Anmeldenummer: 96929122.8
(22) Anmeldetag: 05.09.1996
(51) Int. Cl.: A01G 5/06

(54) **EINRICHTUNG ZUM FRISCHHALTEN VON BLUMEN**
DEVICE TO KEEP FLOWERS FRESH
DISPOSITIF POUR GARDER DES FLEURS FRAICHES

(43) Veröffentlichungstag der Anmeldung: 30.06.1999
(73) Patentinhaber: Hetze, Peter, 2101 Bisamberg (AT); Janecka, Robert, 1100 Wien (AT)
(72) Erfinder: Hetze, Peter, 2101 Bisamberg (AT); Janecka, Robert, 1100 Wien (AT)
(74) Vertreter: Itze, Peter, Dipl.-Ing.
(86) Internationale Anmeldenummer: AT9600159
(87) Internationale Veröffentlichungsnummer: WO98009504

(56) Entgegenhaltungen:
- WO-A-89/07392
- DE-A- 3 809 121
- FR-A- 2 500 287
- US-A- 3 842 539
- US-A- 4 167 832

## Beschreibung

Die Erfindung bezieht sich auf eine Einrichtung zur Frischhaltung von Schnittblumen, mit welcher der Frischhalteflüssigkeit Nährstoffe zugesetzt werden, wobei für die Nährstoffe ein Träger vorgesehen ist, von welchem die Nährstoffe direkt in die Frischhalteflüssigkeit einbringbar sind.

Bisher werden Schnittblumen in der Regel dadurch frisch gehalten, daß regelmäßig die Frischhalteflüssigkeit, normalerweise Wasser, gewechselt wird. Für bestimmte Blumensorten gibt es noch Düngezusätze für die Frischhalteflüssigkeit, wobei dann immer nur Wasser nachgefüllt werden darf, um eine gute Nährstoffausnützung zu erzielen. Ein solcher Zusatz von Nährstoffen ist unangenehm zu handhaben, wobei dann bei Überreichen von Blumen, welche z.B. ein Besucher mitbringt, die passenden Dünger oft nicht zur Verfügung stehen.

Bei der aus der DE-OS 38 09 121 bekannten Ausbildung der eingangs genannten Art handelt es sich um Papierröllchen, die mit Frischhaltechemikalien getränkt sind, und in den gebundenen Strauß mit eingebunden bzw. gesteckt werden. Diese Papierröllchen können dabei in farblicher Hinsicht auf den Strauß abgestimmt werden. Die bekannte Ausbildung hat dabei den Nachteil, daß diese Papierröllchen bereits bei Einstecken in den Strauß die Chemikalien abgeben können, wobei bei feuchten oder nassen Stengeln, wie dies bei Schnittblumen üblich ist, die Chemikalien in relativ hoher Konzentration an die Stengeln direkt herangebracht werden, wobei es im Kontaktbereich sogar zu Schädigungen des Pflanzengewebes kommen kann. Die herausgelösten Düngesubstanzen werden eventuell auch in das umgebende Papier abgegeben, welches die Flüssigkeit aufsaugt, worauf dann die Düngesubstanzen in weiterer Folge für die Düngung des Frischhaltewassers nicht mehr zur Verfügung stehen.

Die US-PS 4 167 832 offenbart eine präparierte Banderole mit bakteriziden oberflächenaktiven und/oder nährstoffhältigen Wirkstoffen. Es ist nicht möglich, diesen Träger in den Strauß mit einzubinden, sondern dieser wird um den Strauß herumgewunden und gibt, wie schon vorstehend beschrieben, die Wirkstoffe bereits vorzeitig unter Umständen an den feuchten Blumenstengel direkt ab, was diesen schädigt. Überdies werden bei Einwässerung der Pflanzen vielfach Banderolen, die den Blumenstrauß zusammenhalten, weggenommen, sodaß im vorliegenden Fall die Banderole zur Düngung des Frischhaltewassers nicht zur Verfügung stehen würde.

Die US-PS 3 842 539 betrifft einen auf Blumenstengel aufsetzbaren Behälter, welcher mit einem Ionenaustauscherharz versehen ist, wobei dieses Ionenaustauscherharz durch eine Gazeschicht vom eigentlichen Blumenstengel getrennt ist. Dieses Ionenaustauscherharz vermindert die physikalische Blockierung des wasserleitenden Gewebes und hilft damit, die Blumen in frischem Zustand zu halten. Insbesondere wird hier die Blockierung des unteren Endes des Blumenstengels durch Austrocknen oder Verrottung hintangehalten.

Der Erfindung liegt nun die Aufgabe zugrunde, eine Einrichtung der vorstehenden Art so auszubilden, daß einerseits eine zuverlässige Freigabe von Düngesubstanzen an das Frischhaltewasser erfolgen kann und andererseits dieser Düngemittelträger problemlos in den Blumenstrauß mit eingebunden werden kann, wobei auch bei Vorhandensein von feuchten Blumenstengeln diese keinen Schaden nehmen sollen.

Erfindungsgemäß wird diese Aufgabe dadurch gelöst, daß der halm-, stengel-, stiel- oder stabförmig ausgebildete Träger mit einem Behälter zur Aufnahme und Abgabe der Nährstoffe versehen ist, dessen Wandung, zumindest in Teilbereichen, durchlässig ist. Damit wird erreicht, daß der Behälter die in ihm gespeicherten Substanzen von den Blumenstengeln fernhält, sodaß ein ungewünschtes früheres Herauslösen der Substanzen vermieden ist. Eine derartige Einrichtung kann mit einem Blumenstrauß direkt miteingebunden werden, wobei dann sogleich beim Einwässern des Blumenstraußes die entsprechenden Nährstoffe an die Frischhalteflüssigkeit 5 abgegeben werden können, da Frischhalteflüssigkeit von außen in den Behälter eindringt und die im Behälter befindlichen Nährstoffe herauslöst. Es liegt damit ein fertig konfektioniertes Produkt vor, das keiner weiteren Manipulation bedarf.

Für eine besonders einfache Fertigung kann der Nährstoffbehälter als gesonderter Teil gefertigt sein, der an dem halm-, stengel-, stiel- oder stabförmigen Träger anbringbar ist. Dadurch ist es möglich, zu einheitlichen Oberteilen unterschiedliche Nährstoffbehälter vorzusehen, und zwar abhängig von der zu düngenden Blumengattung, da ja bekanntlich unterschiedliche Blumengattungen auch unterschiedliche Düngerzusammensetzungen bevorzugen. Um einerseits Nährstoffe an einem unbeabsichtigten Herausfallen zu hindern und anderseits auch flüssige Zubereitungen verwenden zu können, können für die Durchlässigkeit des Behälters in dessen Wandung Durchbrechungen vorgesehen sein, die vor dem Einbringen in die Frischhalteflüssigkeit abgedeckt sind. In besonders einfacher Weise kann bei einem zylindrischen oder prismatischen Behälter und bei im Mantel angeordneten Durchbrechungen als Abdeckung eine axial verschiebbare Muffe bzw. eine abziehbare Folie vorgesehen sein. Dies gibt die Möglichkeit, nur teilweise die Durchbrechungen ) freizugeben, und zwar entweder dadurch, daß die verschiebbare Muffe nur zum Teil in axialer Richtung verschoben wird, oder daß die abziehbare Folie nur von Teilbereichen des mit den Durchbrechungen versehenen Mantels abgezogen wird. Wenn es sich um feste Nährstoffzubereitungen oder um solche Nährstoffzubereitungen handelt, die nicht in Wasser gelöst sind, kann die Abdeckung aus wasserlöslichem 5 oder sich in Wasser zersetzendem Material gefertigt sein, wobei das Material für die Abdeckung vorzugsweise ein sich zeitlich verzögert auflösendes bzw. zersetzendes Material ist. Dies hat den Vorteil, daß der Behälter nach Einbringen in die Frischhalteflüssigkeit automatisch die Durchbrechungen freigibt, wodurch die Düngung der Blumen selbsttätig erfolgt, ohne daß diverse Manipulationen 0 vorgenommen werden müssen. Die zeitliche Verzögerung kann zusätzlich den Vorteil bringen, daß bei vorübergehendem Einwässern des Blumenstraußes die Nährstoffe noch nicht freigegeben werden, sondern erst nach entsprechender Zeit in der Vase, in der der Blumenstrauß endgültig verbleibt. Um einerseits zu hohe Anfangskonzentrationen von Nährstoffen in der Nährlösung zu vermeiden und auch um zu verhindern, daß die Nährstoffe sehr rasch aufgebraucht sind, können die im Behälter vorgesehenen Nährstoffe in eine diese verzögernd freigebende Struktur eingebettet sein. Für ein besonders gesteuertes Abgeben der Nährstoffe an die Frischhalteflüssigkeit können die Nährstoffe in einem Behälter vorgesehen sein, dessen Wandung zumindest in Teilbereichen semipermeabel ist und Öffnungen 0 aufweist, durch welche Nährlösung aufgrund der Osmosewirkung in die Frischhalteflüssigkeit abgebbar ist. Je nach Konzentration der Nährsalze wird dann aufgrund der Osmosewirkung Flüssigkeit durch die semipermeable Wand angesaugt und ein Nährstoff-/Flüssigkeitsgemisch durch die vorhandenen Öffnungen in die Frischhalteflüssigkeit hineingebracht. Dies erfolgt zwangsweise gesteuert durch den aufgrund der Osmosewirkung erhöhten Innendruck im Behälter.

Um eine zuverlässige und gleichmäßige Einbringung der Nährstoffe in die Nährlösung zu erreichen, kann den Nährstoffen zusätzlich ein physiologisch unbedenkliches Treibmittel, z.B. ein CO₂-freisetzendes Mittel, zugesetzt sein. Dieses Treibmittel kann auch dazu dienen, die Nährstoffe rasch aus dem Behälter auszutreiben und gleichmäßig im Behälter zu verteilen. Außerdem kann das Treibmittel auch zusätzlichen, wachstumsfördernden Effekt ergeben. In besonders einfacher Weise kann der Behälter aus flexiblem durchlässigem Material, z.B. Papier, Vlies, einer perforierten Folie od.dgl., gebildet sein, welches an bzw. um den Träger herum angebracht ist. Damit ist eine einfache, billig zu fertigende Ausbildung geschaffen, da keine besonders geformten Träger erforderlich sind. Um ein Abfallen des Behälters vom Träger zu verhindern, kann der Träger im Bereich des Behälters mit Rillen, Abflachungen od.dgl., versehen sein.

Bei einer weiteren Ausführungsform kann der Behälter als Zylinder ausgebildet sein, dessen obere Stirnfläche durch einen Kolben gebildet ist, welcher mit dem Träger verbunden ist, wobei vorzugsweise der Träger die Kolbenstange bildet. Dies ermöglicht es, die Nährstoffe entweder zur Gänze oder aber in Teilmengen in die Frischhalteflüssigkeit einzubringen, u.zw. je nach Weite des Einschiebens des Kolbens in den Zylinder. Dabei kann der zylindrisch oder prismatisch ausgebildete Behälter an dem unteren Ende die Ausgabeöffnung bzw. -öffnungen aufweisen, wobei der Behälter an dem unteren Ende schräg zu seiner Längsachse abgeschnitten ist oder eine gezackt oder wellenlinienförmige Begrenzung aufweist. Damit ist es möglich, den Behälter am Boden abgestützt zu entleeren, indem der Träger nach unten gedrückt und damit der Kolben im Behälter nach unten bewegt wird, was ein Herausdrängen der Nährstoffe aus dem Behälter bewirkt. Um Behälter und Trägerstab unabhängig voneinander tauschen zu können, kann in einfacher Weise der Behälter an seiner Oberseite einen Schnappdeckel aufweisen, in welchen der stabartige Träger eingesteckt bzw. in welchem dieser in Längsrichtung geführt ist.

Schließlich kann der Träger an seinem oberen Ende eine Aufnahme zum Einstecken eines Widmungsträgers, einer Grußkarte, einer Figur, eines Geschenkbehälters, eines Parfumfläschchens, Wunderkerzen od. dgl. aufweisen, wodurch dem Träger auch noch eine weitere Funktion als Träger von persönlichen Beigaben zukommt. Eine derartige Ausbildung ist keiner der bekannten Ausbildungen entnehmbar, welche für den angeführten Doppeleffekt weder konzipiert noch eingerichtet sind.

In der Zeichnung sind einige Ausführungsbeispiele des Erfindungsgegenstandes dargestellt.

Fig. 1 zeigt schematisch den Gesamtaufbau der Einrichtung, wobei an der Oberseite ein Widmungsblatt od. dgl. aufgesteckt ist.

Fig. 2 zeigt in größerem Maßstab einen Schnitt durch das untere Ende der Einrichtung mit an einem Ende angesetzten erfindungsgemäßen Behälter.

Fig.3 gibt eine andere Ausführungsvariante des Behälters in einer der Fig. 2 analogen Darstellung wieder.

Fig. 4 veranschaulicht einen erfindungsgemäßen Behälter, welcher mit Feststoffen gefüllt ist.

Fig. 5 zeigt eine Ausführungsvariante, bei welcher der halm-, stengel-, stieloder stabförmig ausgebildete Träger in seinem unteren Bereich direkt als Behälter ausgebildet ist.

Fig. 6 veranschaulicht eine andere Ausführungsvariante des am Träger befestigten Behälters.

Fig. 7 gibt die Ausführungsform gemäß Fig. 6 mit zugehöriger Verpackung wieder.

Fig. 8 ist eine Seitenansicht eines weiteren Ausführungsbeispiels des Behälters.

Fig. 9 gibt ebenfalls in Seitenansicht eine abgewandelte Ausführungsform wieder.

Fig. 10 zeigt eine weitere Ausbildung der erfindungsgemäßen Anordnung, bei welcher die Nährstoffe in einem dichten Außenbehälter eingebracht und mittels des als Kolbenstange wirkenden Trägers aus dem Behälter ausbringbar sind.

Fig. 11 veranschaulicht eine Variante, bei welcher der die Nährstoffe in flüssiger Form enthaltende Behälter mittels einer Spitze, die am Ende des im Außenbehälter verschiebbaren Trägerstabes vorgesehen ist, perforierbar ist.

Fig. 12 und 13 geben Abwandlungen der Form des Außenbehälters gemäß Fig. 10 wieder.

Fig. 14 zeigt eine grundsätzliche andere Ausführungsform, bei welcher die Nährstoffe in einem am dem in die Flüssigkeit ragenden Teil des Trägers befestigten, flexiblen durchlässigen Behälter vorgesehen sind.

Fig. 15 ist eine Seitenansicht der Ausbildung gemäß Fig. 14.

Fig. 16 veranschaulicht eine Abwandlung der Ausführung gemäß Fig. 14, bei welcher der Träger in das Innere des Behälters ragt.

Fig. 17 zeigt eine der Fig. 16 ähnliche Variante, bei welcher der Träger am Behälter seitlich über eine Lasche befestigt ist.

Fig. 18 gibt eine weitere Abwandlung der Ausführung gemäß Fig. 16 wieder. 5 Fig. 19 zeigt eine weitere Befestigungsmöglichkeit des Behälters am Träger.

Fig. 20 veranschaulicht schematisch eine andere Behälterausbildung in am Träger befestigter Lage.

Fig. 21 gibt eine Behälteranordnung nach Art eines Pfeilendes wieder.

Fig. 22 zeigt eine der Fig. 21 analoge Ausbildung jedoch nur mit zwei Flügeln. 0 Fig. 23 gibt die Anbringung der Flügel gemäß Fig. 21 und Fig. 24 jene gemäß Fig. 22 genauer wieder.

Fig. 25 bis Fig. 27 zeigen verschiedene Varianten von am unteren Ende des Trägers angebrachten Schnappdeckeln, die mit Behälter der verschiedensten Form zusammenwirken.

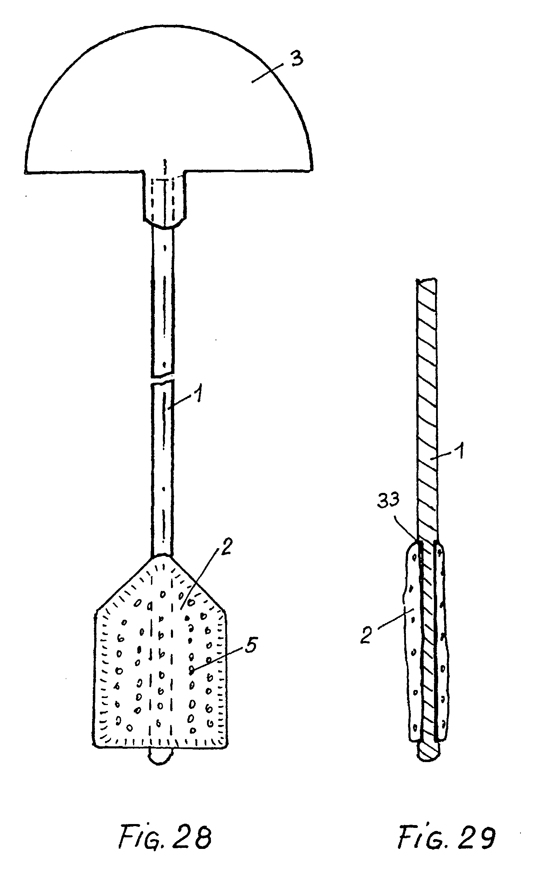

5 Fig. 28 gibt eine Ausführungsform wieder, bei welcher der Träger zwischen zwei Taschen eines Behälters hindurchgeführt ist.

Fig. 29 gibt im Detail die Festlegung des Behälters an Träger wieder.

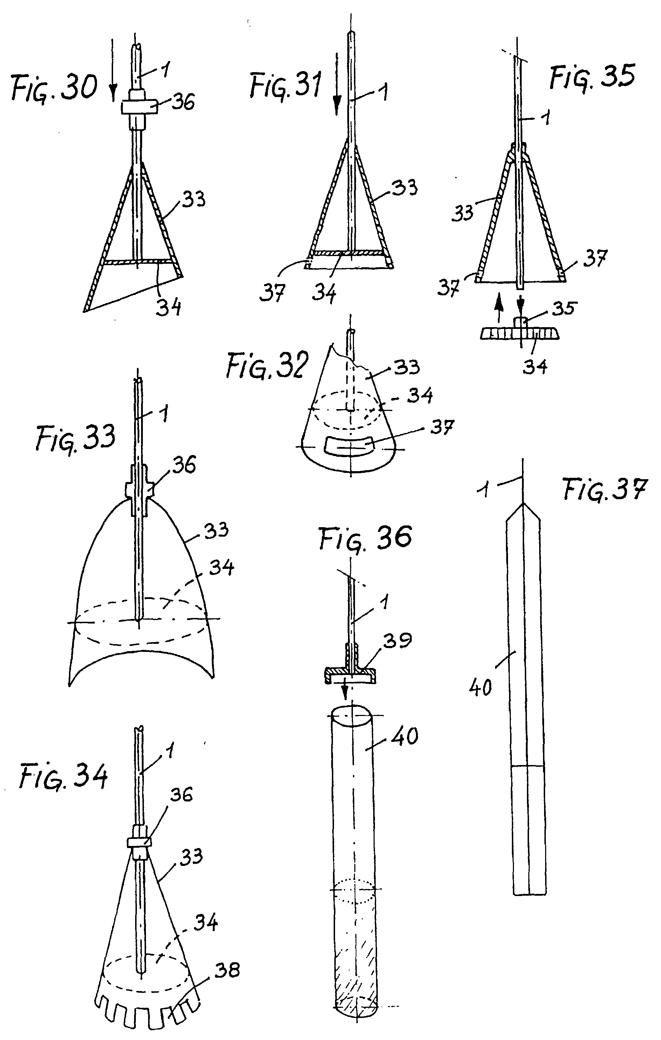

Fig. 30 zeigt im Vertikalschnitt eine weitere Ausführungsvariante, bei welcher der Boden des Behälters aus seiner Halterung im Gehäuse herausgedrückt wird.

Fig. 31 ist eine der Fig. 30 analoge Darstellung, jedoch bei geringfügig geändertem Außenkegel.

Fig. 32 zeigt die Ausbildung gemäß Fig. 31 schaubildlich, teilweise weggeschnitten.

Fig. 33 gibt schematisch eine der Fig. 30 analoge Darstellung, jedoch mit anderer Außenkontur des Behälters wieder.

Fig. 34 stellt eine weitere Ausführungsform schematisch dar, bei welcher der untere Rand des kegelartigen Behälters gezackt ist, um der Frischhalteflüssigkeit Zutrittsmöglichkeit in das Innere des Behälters zu geben.

Fig. 35 zeigt einen Vertikalschnitt durch einen kegelförmigen Behälter, wobei die einzelnen Teile auseinandergezogen dargestellt sind und Pfeile andeuten, in welcher Weise der Behälter nach Einfüllen des Frischhaltemittels verschlossen wird.

Fig. 36 gibt den unteren Teil des stengelartigen Trägers wieder, welcher mit einem Halteorgan für einen Düngekörper versehen ist.

Fig. 37 zeigt schematisch eine Seitenansicht einer weiteren Ausführungsvariante eines Düngekörpers, welcher an einem Draht oder einem ähnlichen Träger aufgehängt ist.

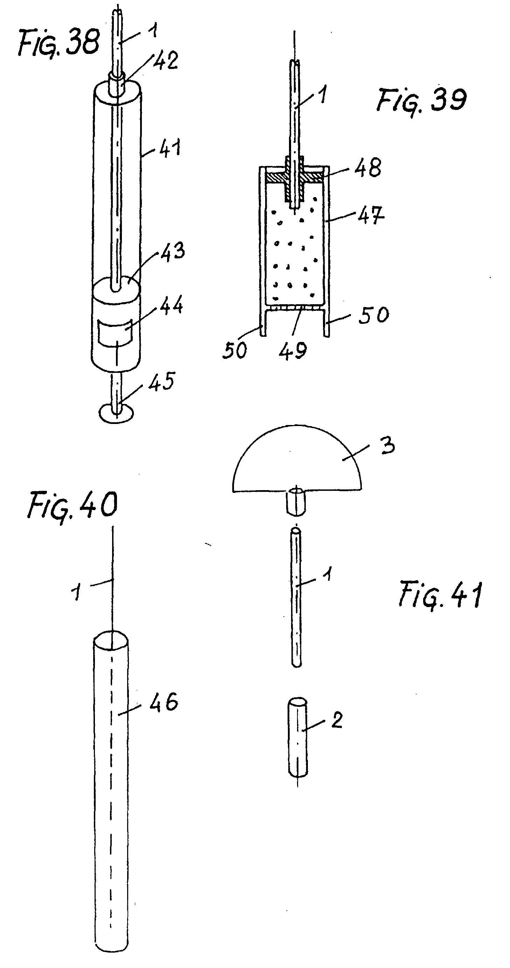

Fig. 38 gibt schaubildlich eine weitere Ausführungsvariante wieder, bei welcher der Behälter durch ein Distanzmittel vom Boden abgestützt ist.

Fig. 39 zeigt im Querschnitt eine Ausführungsform, bei welcher das Frischhaltemittel mittels eines Kolbens aus dem Behälter ausgetrieben wird.

Fig. 40 zeigt eine besonders einfache Ausführungsform, bei welcher ein Düngemittelträger an einem Draht befestigt ist.

Fig. 41 zeigt schließlich schematisch die einzelnen Teile des Erfindungsgegenstandes vor dem Zusammensetzen, nämlich dem halm-, stengel-, stiel- oder stabförmigen Träger mit einem Aufsatzkörper und einem Düngemittelbehälter.

An einem halm- oder stengelartigen Träger 1 ist im Bereich des unteren Endes ein Behälter 2 vorgesehen, welcher mit Nährstoffen gefüllt ist. Am oberen Ende des halm- oder stengelartigen Trägers ist eine Glückwunschkarte oder ein sonstiger Widmungsträger 3 einsteckbar.

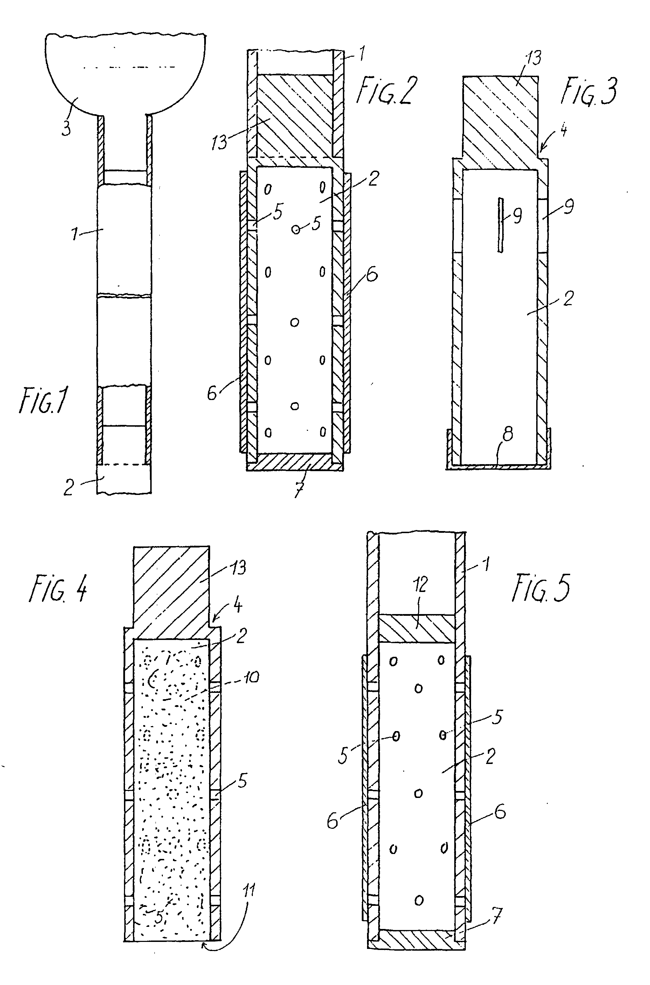

Der Behälter 2 ist dabei entweder, wie in den Fig. 1 bis 4 dargestellt, als vom halm-,stengel-, stiel- oder stabförmig ausgebildeten Träger 1 gesonderter Teil ausgebildet, welcher in das Innere des unteren Endes des genannten Trägers 1 einsetzbar ist, oder aber er kann, wie in Fig. 5 dargestellt, als vom übrigen Träger 1 getrennter Bereich des Trägers ausgebildet sein.

Bei den Ausführungsformen der Fig. 1 bis 4 weist der Behälter 2 im oberen Teil eine stufenartige Einschnürung 4 auf, deren Außendurchmesser dem Innendurchmesser des unteren Bereiches des halm-, stengel-, stiel- oder stabförmig ausgebildeten Trägers 1 entspricht, wodurch eine reibungsschlüssige Verbindung zwischen den beiden Teilen herstellbar ist.

Der Behälter gemäß Fig. 2 ist in seinem Mantelbereich mit Öffnungen 5 versehen, welche durch eine Abdeckung 6 verschlossen sind. Die Abdeckung 6 ist im Falle eines zylindrischen oder prismatischen Behälters entweder in Axialrichtung des Trägers 1 verschiebbar, oder aber diese Abdeckung kann als abziehbare Folie ausgebildet sein. Das untere Ende des Behälters 2 ist mittels eines Stopfens 7 verschlossen. Bei einer Nährstofflösung, bei welcher die Nährstoffe in einem nicht wassermischbaren Medium gelöst sind, könnte die Abdeckung 6 aus einem wasserlöslichen oder sich in Wasser zersetzenden Material gefertigt sein.

Die Ausführungsvariante gemäß Fig. 3 unterscheidet sich dadurch, daß der Behälter 2 an seinem unteren offenen Ende über eine semipermeable Membran 8 abgeschlossen ist und daß die Wandung des Behälters 2 durchgehende Schlitze 9 aufweist, deren Kanten im Normalzustand aneinanderliegen und ein Austreten der Flüssigkeiten verhindern. Aufgrund der osmotischen Verhältnisse wird Frischhalteflüssigkeit, üblicherweise Wasser, durch die semipermeable Membran 8 in das Innere des Behälters 2 eingesaugt, wodurch sich der Druck im Inneren des Behälters soweit erhöht, daß die Schlitze 9 aufgeweitet werden, sodaß Öffnungen 5 entstehen, durch welche die Nährlösung in die umgebende Flüssigkeit austreten kann. Dadurch kann eine gesteuerte kontinuierliche Abgabe der Nährlösung erzielt werden.

Bei der Ausführungsvariante gemäß Fig. 4 ist der Behälter in gleicher Weise wie gemäß Fig. 2 ausgebildet, jedoch sind die Nährstoffe in einem festen Tragkörper 10 aufgesaugt, welcher sich im Wasser langsam zersetzt und damit die in ihm befindlichen Nährstoffe an die Frischhalteflüssigkeit abgibt. Das Abgeben der Flüssigkeit kann dabei entweder über das unten offene Ende 11 des Behälters 2 erfolgen, oder aber auch durch die im Mantel befindlichen Öffnungen 5.

In nicht dargestellter Weise kann natürlich ein fester Träger für die Nährstoffe auch direkt an dem halm-, stengel-, stiel- oder stabförmig ausgebildeten Träger 1 angesteckt sein, wodurch sich das Vorsehen eines speziellen Behälters 2 erübrigen würde. Die Steuerung der Freigabe der Nährstoffe würde dann durch die Zusammensetzung des Trägers erfolgen.

Die Ausführungsvariante gemäß Fig. 5 entspricht von ihrem Aufbau her jener gemäß Fig. 2, jedoch ist der Behälter 2 als integrierter Teil des halm-, stengel-, stieloder stabförmig ausgebildeten Trägers 1 ausgebildet, sodaß also dieser Behälter 2 das untere Ende des Trägers 1 bildet. Der Innenraum des Trägers 1 ist gegenüber dem Behälter 2 über einen Stopfen 12 abgedichtet. Diese Abdichtung entfällt bei den Ausführungsvarianten gemäß Fig. 1 bis 4 deshalb, weil das obere Ende 13 des Behälters 2, an dessen Außenseite die Einschnürung 4 vorgesehen ist, die Abdichtung gegenüber dem Inneren des Halmes 1 selbsttätig vornimmt.

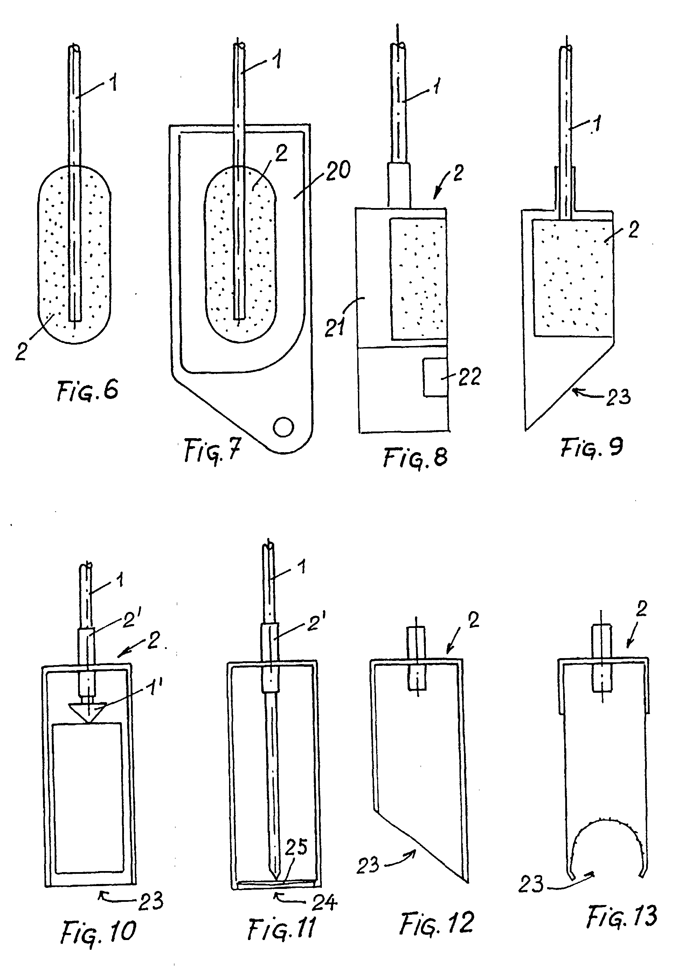

Das Ausführungsbeispiel nach Fig. 6 und 7 zeigt einen Behälter 2, der am Träger 1 dieses fest umgebend angebracht ist. Der Behälter 2 ist für Flüssigkeit durchlässig und erlaubt so die Abgabe der Nährstoffe an die Flüssigkeit. Der Behälter 2 ist für den Lager- bzw. Transportzustand mit einer Verpackung 20, z.B. einer Tiefziehfolie umschlossen.

Fig. 8 zeigt eine Variante, bei welcher der am Träger 1 angebrachte Behälter 2 nur teilweise perforiert ist, wogegen der Rest des Behälters von einer festen Wandung 21 umgeben ist. Für einen besseren Zutritt der Flüssigkeit ist eine Öffnung 22 im Mantelbereich vorgesehen, um auch von unter her einen Flüssigkeitszutritt zu den Nährstoffen zu erlauben. Fig. 9 ist eine ähnliche Ausbildung, jedoch mit anders gestaltetem festen Behälterbereich 21 und Zutrittsöffnung 23.

Fig. 10 gibt eine Variante wieder, bei welcher im Behälter 2 die Nährstoffe in einer zusätzlichen Verpackung vorgesehen sind, welche mit einer am unteren Ende des Trägers 1 angeordneten Spitze 1' durchstoßbar ist, wenn der Träger 1 durch eine Gleitführungsbuchse 2' im Deckel des Behälters 2 in den Behälter eingeschoben wird. der Inhalt der zusätzlichen Verpackung entleert sich dann über die Öffnung 23 in das Innere der Blumenvase.

Gemäß Fig. 11 ist der der Träger 1 gleichfalls in der Buchse 2' des Behälters 2 längsverschieblich geführt, weist jedoch am unteren Ende einen Kolben 25 auf, mittels welchem die im Behälter 2 befindlichen Nährstoffe durch die Öffnung 24 hindurch in die Vase gedrückt werden können.

Fig. 12 und 13 zeigen andere Ausführungsformen des Außenbehälters 2 für die Ausführungsvarianten gemäß Fig. 10 und 11.

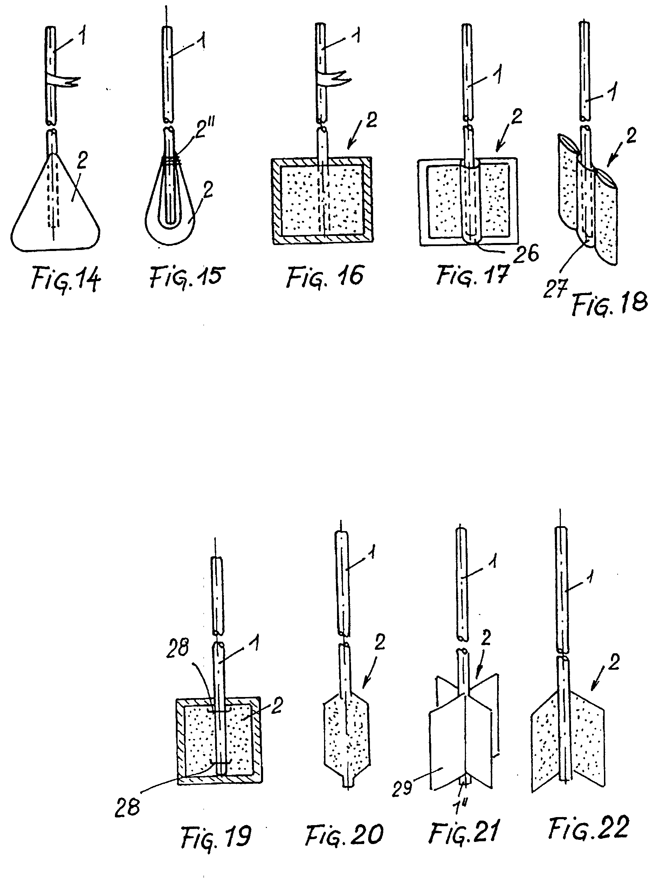

In Fig. 14 und 15 ist eine besonders einfache Variante gezeigt, bei welcher der Behälter 2 als Säckchen ausgebildet ist, das um das untere Ende des Trägers 1 herumgelegt und mittels eine Bindfadens 2" od.dgl. festgelegt ist.

Fig. 16 veranschaulicht eine Variante, bei welcher der Behälter 2 direkt auf das untere Ende des Trägers 1 aufgeschoben ist, also der Träger in das Säckchen hineinreicht.

Gemäß Fig. 17 ist der als Säckchen ausgebildete Behälter 2 mittels einer Lasche 26 am Träger 1 festgelegt, gemäß Fig. 18 zwischen zwei Behälterkammer in einen schlauchartigen Teil 27 eingeschoben.

Bei der Variante gemäß Fig. 19 erfolgt die Festlegung des als Säckchen ausgebildeten Behälters 2 am Träger 1 über Klammern 28.

Fig. 20 zeigt eine Ausführung, bei welcher der unterste Teil des Trägers 1 selbst als Behälter 2 ausgebildet ist.

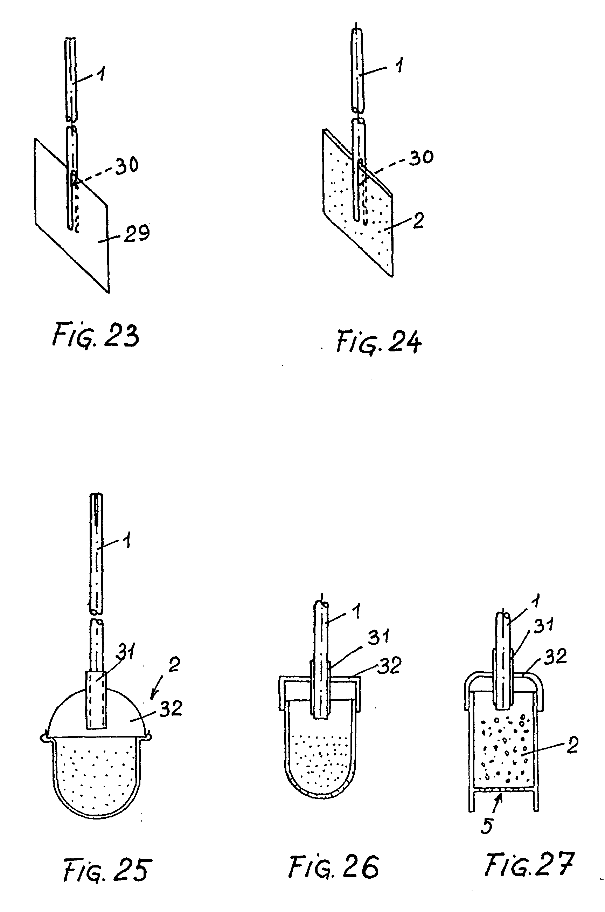

Fig 21 bis Fig. 24 veranschaulichen verschiedene Varianten, bei welchen der Träger 1 an seinem unteren Ende einen Schlitz 30 oder zwei kreuzförmig angeordnete Schlitze aufweist, in welche der Behälter 2 für die Nährstoffe eingesteckt ist. Der Behälter kann dabei kärtchenartig, wie bei 29 angedeutet, oder als flaches Säckchen, wie in Fig. 24 gezeigt, gestaltet sein. Bei Fig. 21 sind die Kärtchen nach Art eines Pfeilendes eingesteckt. das unterste Ende 1" des Trägers 1 wirkt dabei als Distanzhalter gegen den Boden der Vase.

Bei den Varianten gemäß Fig. 25 bis 27 weist der Behälter 2 einen Deckel 32 ) auf, der nach Art eines Schnappdeckels auf den Behälter 2 aufgesetzt ist. In dem Deckel 32 ist eine Hülse 31 zentral angebracht, in welche der Träger 1 paßgenau eingesetzt ist. Der Behälter 2 kann verschieden gestaltet sein, u.zw. zur gänze perforiert (Fig. 25), nur im unteren Bereich mit Durchlässen versehen (Fig. 26) oder als zylindrischer Behälter mit nach innen zurückversetztem Boden, der die Durchlässe (5) für die Nährstoffe aufweist (Fig. 27).

Fig. 28 gibt wieder die gesamte Ausbildung der erfindungsgemäßen Anordnung wieder, u.zw. sowohl den am Träger 1 angebrachten Behälter 2 als auch den Aufsatzteil 3, der ein Widmungsträger, eine Grußkarte, eine Figur, ein Geschenkbehälter, z.B. für ein Schmuckstück, ein Parfumfläschchen, Wunderkerzen od.dgl. sein kann. Der Behälter 2 ist nach Art eines Aufgußbeutels für Tee ausgebildet, wobei die Wandung des Behälters durch ein poröses Vlies gebildet ist, durch welches hindurch die Nährstoffe aus dem Inneren des Behälters ausgelaugt werden.

In Fig. 29 ist schließlich noch im Detail eine weitere Ausführungsvariante gezeigt, bei welcher der Träger 1 im Bereich des Behälters 2 mit Abflachungen 33 versehen ist, um einen sicheren Halt des als Säckchen ausgebildeten Behälters 2 zu gewährleisten.

Bei den Ausführungsformen gemäß Fig. 30 - 34 weist der Behälter einen sich nach oben zu verjüngenden Mantel 33 auf, in den von unten her eine Abschlußplatte 34 eingesetzt ist. Fig. 35 veranschaulicht dabei den Zusammenbau eines Behälters gemäß Fig. 31, wobei der halm-, stengel-, stiel- oder stabförmig ausgebildete Träger 1 im Bereich der Spitze des Behälters durch diesen hindurchtritt und mit seinem unteren Ende an der Abschlußplatte 34, z.B. durch Einschieben in eine Aufnahme 35, befestigt wird. Bei den Ausführungsformen gemäß Fig. 30 - 34 ist im oberen Teil eine eigene Führung 36 für den Träger 1 vorgesehen.

5 Um ein Austreten des Frischhaltemittels in die Frischhalteflüssigkeit zu ermöglichen, ist gemäß Fig. 30 der untere Rand des Behälters 33 abgeschrägt, gemäß Fig. 31 sind in dem unterhalb der Abschlußplatte befindlichen Teil Durchlaßöffnungen 37 vorgesehen, durch welche bei Aufstehen des Behälters 33 am Boden die Frischhalteflüssigkeit mit dem Frischhaltemittel in Kontakt treten kann. 0 Beim Ausführungsbeispiel nach Fig. 33 hingegen ist der untere Rand des Behälters 33 geschwungen ausgebildet bzw. gemäß Fig. 34 gezackt. Diese Zacken weisen dann ebenfalls Durchlässe 38 auf, welche das Eintreten von Frischhalteflüssigkeit in den Behälter und damit ein Auswaschen des Frischhaltemittels ermöglichen.

Gemäß Fig. 36 ist am unteren Ende des Trägers 1 eine Kappe 39 vorgesehen, in welche ein Düngemittelträger 40 einsetzbar ist, welcher selbsttragend ist und welcher gegebenenfalls mit einem eine Retardwirkung erzeugenden Mittel überzogen ist.

Fig. 37 zeigt eine der Fig. 36 analoge Ausführungsvariante, jedoch ist der Träger 1 als dünnes Element ausgebildet, was den komletten Düngemittelträger 40 durchsetzt und von diesem umgeben ist.

Fig. 38 zeigt einen zylindrischen Behälter 41, der an seinem oberen Ende eine Führung 42 für den Träger 1 aufweist, welch letzterer an seinem freien Ende mit einem Kolben 43 versehen ist, der dicht in dem zylindrischen Behälter 41 gleiten kann. Die zylindrische Wandung des Behälters 41 weist im unteren Bereich eine Öffnung 44 auf, durch welche mittels des Kolbens 43 das Frischhaltemittel hinausgedrückt werden kann. Diese Öffnung 44 kann vorübergehend so abgeschlossen sein, daß durch den durch den Kolben 43 aufgebrachten Druck der Verschluß platzt und das Mittel hinausgleiten kann. Es kann jedoch auch ein sich im Wasser auflösender Film od.dgl. als Verschluß vorgesehen sein, welcher sich dann im Wasser auflöst und damit bei Hinunterdrücken des Kolbens 43 das Frischhaltemittel in die Flüssigkeit entläßt. Der Behälter 41 ist an seinem unteren Ende mit einem Fuß 45 versehen, welcher sich am Boden abstützt, wodurch verhindert wird, daß das gesamte Frischhaltemittel nur im Bodenbereich der Flüssigkeit ausgegeben wird und sich nicht im Behälter verteilt. Letzteres kann allerdings durch Zugabe von gasbildenden Mitteln, z.B. Brausepulver, verbessert werden. Fig. 40 zeigt eine der Fig. 37 analoge Ausbildung, wobei der Behälter 46 durch ein Papierröllchen od.dgl. gebildet ist.

Fig. 39 gibt wieder einen zylindrischen Behälter 47 wieder, in welchem ein Kolben 48 verschiebbar angeordnet ist, in welchem sich der halm-, stiel-, stengeloder stabförmig ausgebildete Träger 1 abstützt. Am unteren Ende ist der Behälter 47 durch eine perforierte Wandung 49 abgeschlossen und stützt sich über Vorsprünge 50 am Boden ab. Damit können bei Herunterdrücken des Kolbens 48 die enthaltenen Frischhaltemittel durch die Poren der Wandung 49 in die Frischhalteflüssigkeit abgegeben und darin verteilt werden.

Fig. 41 zeigt in auseinandergezogener Darstellung nochmals in größerem Maßstab, den Gesamtaufbau des Erfindungsgegenstandes, welcher eben durch einen halm-, stengel-, stiel- oder stabförmigen Träger 1 einen hier generell mit 2 bezeichneten Behälter für ein Düngemittel und einen, hier generell mit 3 bezeichneten, Aufsatz aufweist. Der Behälter 2 ist natürlich gegen irgendeinen der vorhergehend beschriebenen und wiedergegebenen Behälter austauschbar, analog auch der Aufsatzkörper 3, der als Geschenketräger u.dgl. dienen kann.

Bei allen Ausführungsvarianten kann die Nährstoffzusammensetzung in fester, pulveriger, körnchenartiger oder flüssiger Form vorliegen, wobei in allen nicht flüssigen Zusammensetzungen den Nährstoffen zusätzlich ein physiologisch unbedenkliches Treibmittel, z.B. ein CO₂-freisetzendes Mittel, beigemengt sein kann. Das Treibmittel bewirkt dann, daß bei Eintauchen des Behälters in die Frischhalteflüssigkeit im Behälter ein Gasdruck aufgebaut wird, der die Nährstofflösung rasch aus dem Behälter in die Flüssigkeit austreibt und dort auf Grund der durch das Treibgas bewirkten Zirkulation ein rasches Verteilen der Nährstoffe in der Flüssigkeit bewirkt. Es werden damit lokale Konzentrationsspitzen in der Flüssigkeit vermieden, da solche Spitzen den Pflanzen schaden können.

Die erfindungsgemäße Einrichtung hat zusammengefaßt den Zweck, daß der halm-, stengel-, stiel- oder stabförmig ausgebildete Träger 1 direkt einem Blumenstrauß beigebunden werden kann, wobei dann nach eventueller Ablösung oder Verschiebung der Abdeckung 6 bei Einwässern der Blumen automatisch den Schnittblumen die nötigen Nährsubstanzen zugeführt werden, wodurch ein langes Frischhalten dieser Blumen gewährleistet ist. Auch die Handhabung der erfindungsgemäßen Einrichtung ist überaus einfach, da bei den verschiedenen Ausführungsformen je nach Blumensorte jene Behälter 2 ausgewählt werden, die die richtige Nährstoffzusammensetzung aufweisen, wobei auch auf die Geschwindigkeit der Nährstoffabgabe bzw. des Bedrafsprofiles Bedacht genommen werden kann. Diese Behälter werden dann an den Träger 1 angesetzt und dieser Träger dann mit den einzelnen Blumen zu dem Strauß gebunden. Für spezielle Anlässe kann an dem Träger an der Oberseite ein Widmungsträger (3), eine Grußkarte, eine Figur, ein Geschenkbehälter, ein Parfumfläschchen, Wunderkerzen od. dgl. angesteckt werden.

## Patentansprüche

1. Einrichtung zur Frischhaltung von Schnittblumen, mit welcher der Frischhalteflüssigkeit Nährstoffe zugesetzt werden, wobei für die Nährstoffe ein Träger vorgesehen ist, von welchem die Nährstoffe direkt in die Frischhalteflüssigkeit einbringbar sind, **dadurch gekennzeichnet, daß** die Einrichtung in einen Blumenstrauß miteinbindbar ist und die Nährstoffe erst bei Einwässern des Blumenstraußes an die Frischhalteflüssigkeit abgebbar sind, wobei der halm-, stengel-, stiel- oder stabförmig ausgebildete Träger (1) mit einem Behälter (2) zur Aufnahme und Abgabe der, vorzugsweise in flüssiger, pulveriger oder fester Form vorliegenden, Nährstoffe versehen ist, dessen Wandung, zumindest in einem Teilbereich, durchlässig ist.

2. Einrichtung nach Anspruch 1, **dadurch gekennzeichnet, daß** der Nährstoffbehälter (2) als gesonderter Teil gefertigt ist, der an dem halm-, stengel-, stiel-, oder stabartigen Träger (1) anbringbar ist.

3. Einrichtung nach Anspruch 1 oder 2, **dadurch gekennzeichnet, daß** für die Durchlässigkeit des Behälters (2) in dessen Wandung wenigstens eine Durchbrechung (5, 9) vorgesehen ist, die vor dem Einbringen in die Frischhalteflüssigkeit abgedeckt ist.

4. Einrichtung nach Anspruch 3, **dadurch gekennzeichnet, daß** bei einem zylindrischen oder prismatischen Behälter (2) und bei im Mantel angeordneten Durchbrechungen (5, 9) als Abdeckung (6) eine axial verschiebbare Muffe bzw. eine abziehbare Folie vorgesehen ist.

5. Einrichtung nach Anspruch 4, **dadurch gekennzeichnet, daß** die Abdeckung (6) aus wasserlöslichem oder sich in Wasser zersetzendem Material gefertigt ist, wobei das Material für die Abdeckung vorzugsweise ein sich zeitlich verzögert auflösendes bzw. zersetzendes Material ist.

6. Einrichtung nach Anspruch 1, **dadurch gekennzeichnet, daß** die im Behälter (2) vorgesehenen Nährstoffe in eine diese verzögert freisetzende Struktur (10) eingebettet sind.

7. Einrichtung nach Anspruch 1, **dadurch gekennzeichnet, daß** die Nährstoffe in einem Behälter (2) vorgesehen sind, dessen Wandung zumindest in einem Teilbereich (8) semipermeabel ist und wenigstens eine Öffnung (9) aufweist, durch welche Nährstofflösung aufgrund der Osmosewirkung in die Frischhalteflüssigkeit abgebbar ist.

8. Einrichtung nach einem der Ansprüche 1 bis 4, **dadurch gekennzeichnet, daß** den Nährstoffen zusätzlich ein physiologisch unbedenkliches Treibmittel, z.B. ein CO₂-freisetzendes Mittel, zugesetzt ist.

9. Einrichtung nach einem der Ansprüche 1 bis 8, **dadurch gekennzeichnet, daß** der Behälter (2) aus flexiblem durchlässigem Material, z.B.Papier, Vlies, einer perforierten Folie od.dgl., gebildet ist, welches an bzw. um den Träger (1) herum angebracht ist.

10. Einrichtung nach Anspruch 9, **dadurch gekennzeichnet, daß** der Träger (1) im Bereich des Behälters (2) mit Rillen, Abflachungen (33) od. dgl. versehen ist.

11. Einrichtung nach Anspruch 1, **dadurch gekennzeichnet, daß** der Behälter (2) als Zylinder ausgebildet ist, dessen obere Stirnfläche durch einen Kolben (25) gebildet ist, welcher mit dem Träger (1) verbunden ist, wobei vorzugsweise der Träger (1) die Kolbenstange bildet.

12. Einrichtung nach einem der Ansprüche 1 bis 8, 10 und 11, **dadurch gekennzeichnet, daß** der zylindrisch, prismatisch oder kegelstumpfförmig ausgebildete Behälter (2) an seinem unteren Ende die Ausgabeöffnung (23) bzw. -öffnungen aufweist, wobei der Behälter (2) an dem unteren Ende schräg zu seiner Längsachse abgeschnitten ist oder eine gezackte oder wellenlinienförmige Begrenzung besitzt.

13. Einrichtung nach einem der Ansprüche 1 bis 8 oder 10 bis 12, **dadurch gekennzeichnet, daß** der Behälter an seiner Oberseite einen Schnappdeckel (32) aufweist, in welchen der stabartige Träger (1) eingesteckt bzw. in welchem dieser in Längsrichtung geführt ist.

14. Einrichtung nach einem der Ansprüche 1 bis 13, **dadurch gekennzeichnet, daß** der Träger (1) an seinem oberen Ende eine Aufnahme zum Anbringen eines Widmungsträgers (3), einer Grußkarte, einer Figur, eines Geschenkebehälters, eines Parfumfläschchens, Wunderkerzen od. dgl. aufweist, bzw. die Basis zum Aufstecken einer Halterung für derartige Artikel bildet.

## Claims

1. A device for keeping cut flowers fresh, by said device nutrients are added to the freshness liquid, a carrier being provided for the nutrients from which the nutrients may be fed directly into the freshness liquid, **characterized in that** the device may be integrated into a bouquet and the nutrients are first releasable into the freshness liquid when the bouquet is soaked, the carrier (1), which is shaped like a straw, stem, stalk, or rod, being provided with a container (2), at least a part of whose wall is permeable, for receiving and dispensing the nutrients, which are preferably in liquid, powdered, or solid form.

2. The device according to Claim 1, **characterized in that** the nutrient container (2) is manufactured as a separate part which may be attached to the carrier (1), which is shaped like a straw, stem, stalk, or rod.

3. The device according to Claim 1 or 2, **characterized in that**, for the permeability of the container (2), at least one opening (5, 9) is provided in its wall which opening is covered before its introduction into the freshness liquid.

4. The device according to Claim 3, **characterized in that**, for a cylindrical or prismatic container (2) with openings (5, 9) arranged in the shell, an axially movable sleeve or a removable film is provided as a cover (6).

5. The device according to Claim 4, **characterized in that** the cover (6) is manufactured from a material which is water-soluble or which decomposes in water, the material for the cover preferably being a material which dissolves and/or decomposes with a time delay.

6. The device according to Claim 1, **characterized in that** the nutrients provided in the container (2) are embedded in a structure (10) which releases them with a time delay.

7. The device according to Claim 1, **characterized in that** the nutrients are provided in a container (2), at least a part (8) of whose wall is semipermeable and which has at least one opening (9), through which nutrient solution is dispensable into the freshness liquid due to the effect of osmosis.

8. The device according to one of Claims 1 to 4, **characterized in that** a physiologically harmless propellant, for example a CO₂-releasing agent, is additionally added to the nutrients.

9. The device according to one of Claims 1 to 8, **characterized in that** the container (2) is produced from flexible, permeable material, e.g., paper, fleece, a perforated film, or the like, which is attached to and/or around the carrier (1).

10. The device according to Claim 9, **characterized in that** the carrier (1) is provided in the region of the container (2) with grooves, flat places (33), or the like.

11. The device according to Claim 1, **characterized in that** the container (2) is implemented as a cylinder whose upper face is formed by a piston (25) which is connected to the carrier (1), the carrier (1) preferably forming the piston rod.

12. The device according to one of Claims 1 to 8, 10, and 11, **characterized in that** the container (2), which is shaped as a cylinder, a prism, or a truncated cone, has the outlet opening(s) (23) on its bottom end, the container (2) being cut off at its bottom end diagonal to its longitudinal axis or having a serrated or wavy delimitation.

13. The device according to one of Claims 1 to 8 or 10 to 12, **characterized in that** the container has a snap cover (32) on its top, into which the rod-like carrier (1) is inserted and/or in which it is guided in the longitudinal direction.

14. The device according to one of Claims 1 to 13, **characterized in that** the carrier (1) has receiving means on its top end for attaching a dedication (3), a greeting card, a figure, a gift box, a perfume bottle, sparklers, or the like, and/or forms the base for attaching a holder for articles of this type.

## Revendications

1. Dispositif pour la conservation de fleurs coupées à l'aide duquel on ajoute des substances nutritives au liquide de conservation, un support étant prévu pour les substances nutritives à partir duquel les substances nutritives peuvent être introduites directement dans le liquide de conservation, **caractérisé en ce que** le dispositif peut être intégré dans un bouquet de fleurs et **en ce que** les substances nutritives ne seront introduites dans le liquide de conservation que lorsque le bouquet de fleurs est mis dans l'eau, le support (1) à forme de brin, tige, queue ou baguette étant équipé d'un récipient (2) permettant de contenir et de distribuer les substances nutritives de préférence présentes sous forme liquide, poudreuse ou solide, et dont la paroi est perméable au moins dans une partie.

2. Dispositif selon la revendication 1, **caractérisé en ce que** le récipient de substances nutritives (2) est une partie séparée pouvant être fixée sur le support (1) qui présente une forme de brin, tige, queue ou baguette.

3. Dispositif selon une des revendications 1 ou 2, **caractérisé en ce que** pour la perméabilité du récipient (2) la paroi de celui-ci présente au moins une ouverture (5, 9) qui, avant l'introduction dans le liquide de conservation, est couverte.

4. Dispositif selon la revendication 3, **caractérisé en ce que**, en cas de récipient (2) à forme cylindrique ou de prisme et en cas d'ouvertures (5, 9) disposées dans l'enveloppe, un manchon à déplacement axial ou un film détachable est prévu comme couverture (6).

5. Dispositif selon la revendication 4, **caractérisé en ce que** la couverture (6) est composée d'un matériau soluble dans l'eau ou décomposable dans l'eau, le matériau constituant la couverture étant de préférence un matériau à dissolution ou décomposition temporisée.

6. Dispositif selon la revendication 1, **caractérisé en ce que** les substances nutritives prévues dans le récipient (2) sont intégrées dans une structure (10) les libérant de façon temporisée.

7. Dispositif selon la revendication 1, **caractérisé en ce que** les substances nutritives sont prévues dans un récipient (2) dont la paroi est semi-perméable au moins dans la zone partielle (8) et qu'elle présente au moins une ouverture (9) à travers laquelle la solution nutritive peut être distribuée par effet d'osmose dans le liquide de conservation.

8. Dispositif selon une des revendications 1 à 4, **caractérisé par le fait qu'**un agent propulseur physiologiquement inoffensif est ajouté aux substances nutritives, comme par exemple un agent libérant du CO₂.

9. Dispositif selon une des revendications 1 à 8, **caractérisé en ce que** le récipient (2) est constitué d'un matériau flexible et perméable, comme par exemple de papier, non-tissé, d'un film perforé etc. fixé sur ou entourant le support (1).

10. Dispositif selon la revendication 9, **caractérisé en ce que** le support (1) est équipé de rainures, aplatissements (33) ou similaires dans la zone du récipient (2).

11. Dispositif selon la revendication 1, **caractérisé en ce que** le récipient (2) est un cylindre dont la face supérieure frontale est constituée d'un piston (25) auquel le support (1) est relié, le support (1) formant de préférence la tige du piston.

12. Dispositif selon une des revendications 1 à 8, 10 et 11, **caractérisé en ce que** le récipient (2) à forme de cylindre, prisme ou cône présente à son extrémité inférieure une ou plusieurs ouverture(s) de distribution (23), le récipient (2) étant coupé en biais par rapport à son axe longitudinal à son extrémité inférieure ou présentant une limitation en forme de dents ou ondulée.

13. Dispositif selon une des revendications 1 à 8 ou 10 à 12, **caractérisé en ce que** le récipient présente à sa face supérieure un couvercle encliquetable (32) dans lequel le support (1) à forme de baguette est enfoncé et guidé dans le sens longitudinal.

14. Dispositif selon une de revendications 1 à 13, **caractérisé en ce que** le support (1) forme à son extrémité supérieure une prise permettant la fixation pour un support de dédicace (3), une carte de voeux, une figurine, une boîte à cadeau, un flacon de parfum, bougies magiques ou similaire ou bien **en ce que** le support (1) forme la base permettant d'enficher une fixation pour articles de ce type.
